# EUROPEAN PATENT SPECIFICATION

(11) **EP 1 404 630 B1**
(45) Date of publication and mention of the grant of the patent: **08.10.2008**
(21) Application number: 02771663.8
(22) Date of filing: 23.05.2002
(51) Int. Cl.: C05F 17/02

(54) **COMPOSTER FOR TREATING ORGANIC WASTE**
KOMPOSTIERBEHÄLTNIS FÜR DIE AUFBEREITUNG VON ORGANISCHEM MÜLL
COMPOSTEUR POUR LE TRAITEMENT DES DECHETS ORGANIQUES

(30) Priority: 23.05.2001 FI 20011082
(43) Date of publication of application: 07.04.2004
(73) Proprietor: Pohjola, Pekka, 17800 Kuhmoinen (FI)
(72) Inventor: Pohjola, Pekka, 17800 Kuhmoinen (FI)
(74) Representative: Kupiainen, Juhani Kalervo
(86) International application number: PCT/FI2002/000446
(87) International publication number: WO 2002/094738

(56) References cited:
- WO-A1-01/32588
- WO-A1-94/29241
- WO-A1-95/01294
- DE-A1- 4 402 180
- US-A- 3 847 299
- US-A- 4 105 412
- US-B1- 6 223 927

## Description

The invention is directed to a composter useful for the treatment of organic waste.

### Technical background

Organic waste like biological household waste, garden waste, toilet waste and animal manure may be treated by composting. In composting, organic material is decomposed by microbial action under aerobic conditions mainly to form humus mass and inorganic compounds as well as carbon dioxide, ammonia, and water. In the composting process, the temperature of the mass may rise even to 60°C due to biological combustion, thus destroying most of the pathogenic bacteria and harmful seeds.

The amount of air needed in a composter depends on the amount of organic matter added thereto. For instance 1 kg of biological waste may consume about 2 kg of oxygen to undergo decomposition. This amount of oxygen corresponds to 6 m³ of air. Relatively high amounts of air are thus needed in the composting process of organic waste to make the process quick and effective.

Composting of 1 kg of biological waste produces about 2.2 kg of carbon dioxide, 0.7 kg of water and 0.1 kg of ammonia. Accordingly, the moisture content of the composted mass will increase during composting due to the reduction of the organic matter and production of water unless water is removed for instance with the air from the composter. This increased moisture reduces the oxygen content of the composted mass since the mass becomes more compact and not enough air may pass therein. Therefore, to aerate the composted mass and to remove water, the composter should be provided with a very effective ventilation to make the composting process quick and complete.

Under conditions with low oxygen concentrations the composting process will slow down or may even stop. In this case, also stinking compounds like hydrogen sulfide and organic acids are formed from the organic waste due to fermentation. Under totally oxygen-free conditions methane is also produced from the organic matter. In the presence of low oxygen concentrations or in the absence of oxygen, the decomposition of the organic matter may even stop totally. Stinking matter resulting from the decomposition impedes the use of the composter and hygienic quality of the humus mass obtained as the final product may also be poor since the temperature of the composted mass will not rise sufficiently high during the composting process.

In households, composters with sizes of about 100-1,000 dm³ are commonly used for composting. Thermally isolated composters that may be in use throughout the year also under low temperature conditions are often employed for the treatment of biological waste. Unisolated composters are used for instance to compost garden waste. In such unisolated composters the composting process is often relatively slow and also incomplete.

US 4105412 discloses a portable composter having several openings for air in form of a perforated inner section. Nevertheless, these perforations are not constructed in such a way to let more air in for a quicker composting: the fermentation takes three to four months which can lead to the attraction of animals.

The composted mass should normally be loose and moderately dry to allow enough air to move in for the maintenance of the composting process. Garden waste may be loose enough as such, but generally relatively high amounts of extenders must always be added to compact and wet biological waste to make the composted mass sufficiently loose and dry. On the other hand, excessive use of drying matter may lead to a composted mass that is too dry, thus reducing the activity of the microbes and causing the composting process eventually to stop.

The composting process may be accelerated by using a composting accelerator. In this case the composting process of organic matter may be accomplished for instance in 2 weeks whereas it would take from 2 to 6 months without such an accelerator. On the other hand, such an accelerated composting process needs more air to benefit from the use of the accelerator. It should also be possible to control the amount of water produced in this composting process to keep the moisture content of the composted mass optimal. In conventional composters wherein air is passed into the composted mass for instance through perforated plates or through ventilation pipes, ventilation is relatively weak and relatively low amounts of water are removed with outgoing air. Accordingly, the rate of the composting process is still relatively low, and the higher rate of the process due e.g. to a composting accelerator may in practice not be attained.

### General description of the invention

Now a composter for particularly rapid composting of organic waste has been invented.

To this end, the invention is characterized by aspects that are disclosed in the independent claims. Some preferable embodiments of the invention are presented in other claims.

The composter of the invention comprises on the bottom thereof elevations having a height of 10 to 50 mm, such as elevations with a height of 10 to 30 mm, 20 to 40 mm or 30 to 50 mm, and air openings having a surface area of 50 to 500 mm², such as openings having a surface area of 50 to 300 mm², 100 to 400 mm², 150 to 300 mm², or 150 to 500 mm². Beyond these air openings, a sealing rim is provided having a height equal or higher than that of the elevations on the bottom. On the bottom of the composter, beyond this sealing rim, there are openings for removal of condensed water. Further, the wall of the composter is provided with protrusions having a depth of 10 to 50 mm, such as protrusions being 10 to 20 mm deep, 15 to 25 mm or 20 to 50 mm, and accordingly, the wall also comprises recesses formed thereon. An inner container provided with a sieve portion is adjusted into the composter. The sieve portion of the inner container extends at least to the bottom portion and wall portion of the inner container. The sieve portion may be made of one part or several parts. The waste to be treated and the extender are dosed into the inner container. To accelerate the composting process, a composting accelerator may also be added to this inner container.

The composter of the invention may be cast from EPP (expanded polypropene) that is light, durable, hygienic, recycling and good thermal insulating material. The manufacturing is simple and no many complicating energy consuming stages are not needed.

The inner container of the composter is adjusted to be supported by a cover and/or the protrusions of the wall and sealing rim of the bottom and/or the elevations to pass composting air through the openings on the bottom into the bottom portion of the inner container. Air passes particularly well into the bottom portion of the inner container supported by the sealing rim since the sealing rim prevents the air from passing onto the walls of the composter. Composting air is passed via the composted mass in the inner container through the sieve-like wall portion of the inner container onto the wall thereof. Further, the recesses on the wall guide the air out of the composter through the orifices on the cover and/or wall thereof.

In the composter of the invention, the composting process of organic waste proceeds particularly quickly since composting air may pass into the composter as effectively as possible. The air may pass freely through the air inlet openings on the bottom and via the recesses into the composted mass in the composter. This composting air also leaves very effectively the composted mass through the recesses on the wall. In this composter, the higher rate of the composting process due to the composting accelerator may thus be utilized extremely effectively.

Water being produced during the composting process is removed from the composter both by the composting air and as condensed water through the drainage openings of the condensed water on the bottom of the composter.

The recesses on the bottom and walls of the composter of the invention also serve as an insulating space reducing heat losses thereof. Thus, the temperature of the composted mass will easily rise to a favourable value of e.g. about 60°C.

The inner container of the composter of the invention may be removable designed, to allow for a simple and quick maintenance thereof. The composter may also be made to have a removable sieve portion, e.g. a removable bag. The sieve portion may be connected to the inner container for instance with a spreading collar. The collar of the inner container may be configured to seal the upper part of the inner container with the walls. The upper parts of the protrusions on the wall may be shaped to form a horizontal groove, in which composting air circulates under the collar. The collar may have air openings, through which composting air passes to the orifices on the cover of the composter.

According to an embodiment of the invention, the mesh size of the sieve portion of the inner container is from 0.5 to 2.5 mm, preferably from 1.0 to 2.0 mm and particularly preferably from 1.3 to 1.7 mm. The advantage of the use of such a mesh size is the fact that composting air is effectively passed into the composted mass and, on the other hand, any separated water may easily be removed therefrom. Such sieve-like structure also causes the condensation of excess humidity from composting air and on the other hand prevents any excessive evaporation of humidity from the composted mass. This sieve portion may preferably be made of resistant glass fibre reinforced plastic fabric with a meshlike structure needing little care. The sieve portion may also consist of metal network. In this case, an acid resistant metal network galvanized by dipping or made of stainless steel is preferably used.

Further, an inner cover serving as an insulating means as the composter is started may be adjusted within the inner container or thereon. It may also contribute in preventing the composted mass from excessive drying and in inhibiting microbial growth on the surface of the mass.

Humidity is mainly condensed from the composting air in the recesses of the walls and on the inner cover and wall portions of the inner container. This condensed water is removed from the composter through the openings for separated water beyond the sealing rim. According to an embodiment of the invention these opening can be provided with filters, e.g. with activated carbon filters, to treat condensed water.

According to an embodiment of the invention, a separate lower container for the passage of composting air and condensed water and any separated water may be placed under the bottom of the composter. The edges of the lower container are provided with one or several air inlet opening(s) to pass composting air into the lower container. The lower container has one or more central drainage opening(s) for removal of water from the lower container. (The drainage opening(s) may be surrounded by a ridge preventing the water accumulated on the lower container from direct draining, and thus the lower container may serve as a receptacle.) The drainage opening(s) may be provided with a plug to control the flow of water. Water accumulated on the lower container humidifies the composting air, which is particularly advantageous if the composted mass tends to become too dry as the case may for instance be in composting processes made more efficient by means of a composting accelerator.

The drainage openings may also be provided with activated carbon filters for preventing bad smelling composting air to escape from composter through the drainage openings but allowing the drainage and breathing. These filters may for instance be cylindrical boxes the bottom and the cover perforated and filled with activated carbon or with other adsorbing material.

The drainage rate of the water from the lower container may also be regulated by providing the drainage opening with a water seal. Preferably a water seal may also be used in the outlet opening for condensed water on the bottom of the composter. For instance, with this water seal the amount of water in the lower container may be controlled as desired, and on the other hand, these water seals in the outlet openings for condensed water make the composter still tighter.

According to an embodiment of the invention, the cover and/or the wall of the composter is provided with one or several conical orifice(s) for the removal of composting air. In this conical opening the humidity contained in the air will condensate and may flow back into the composter and the composted mass. This condensing humidity also traps other substances in the composting air thus reducing any undesirable bad odours.

The composter cover and/or wall may also be provided with separate means e.g activated carbon filters for treating the composting air. These activated carbon filters may for instance be disposable filter bags or cylindrical boxes. These treating means may for instance be adjusted in the conical orifices of the cover thus allowing simultaneously for both the purification of the composting air and removal of humidity therefrom for recycling it to the composter.

In households, the composter of the invention may have a total volume of e.g. 25 dm³, the volume of the inner container being in this case about 15 dm³, whereas the inner volume of a conventional composter for an equal amount of waste would be 200-400 dm³. The composter of the invention may be provided with grips for carrying, and thus it may easily be moved and taken along to summer cottage, mobile home or boat. Biological waste from households may be placed directly as such into the composter, and no separate waste bin for biological waste is needed. In addition, it is particularly advantageous (*in summertime*) when the temperatures are high that the storage or transportation of biological waste is no longer necessary.

Generally in continuous operation, the temperature of the composted mass will constantly stay above 50°C due to the composting accelerator, and accordingly, any pathogenic microbes are destroyed as effectively as possible. Final humus being produced in the composter of the invention within about 9 days may be taken therefrom for instance by means of removable inner container, or the upper layer where the decomposition is still going on may be put into another inner container for a new filling process, and thus the composter is not allowed to cool down in the mean time. The humus mass produced in the composting process may also reduce the amount of the extender needed therein.

In case organic wastes smelling particularly bad such as meat and fish wastes are composted, this small sized composter may easily be placed outside or into a ventilated space.

The size of the composter of the invention may vary. The volume of the composter may for instance be 100 dm³, the volume of the inner container being then 75 dm³. It is also possible to make a composter having a volume of 1000 dm³, allowing for the treatment of considerable amounts of wastes. Relatively huge composters may serve for instance as shared composters for attached houses or multistorey buildings or common composters in urban settlements.

### Specific description of the invention

Some applications of the invention are now described in more detail with reference to the appended drawings.
Figure 1 shows a three-dimensional explosion view of the composter.
Figure 2 shows the bottom and the walls of the opened composter.

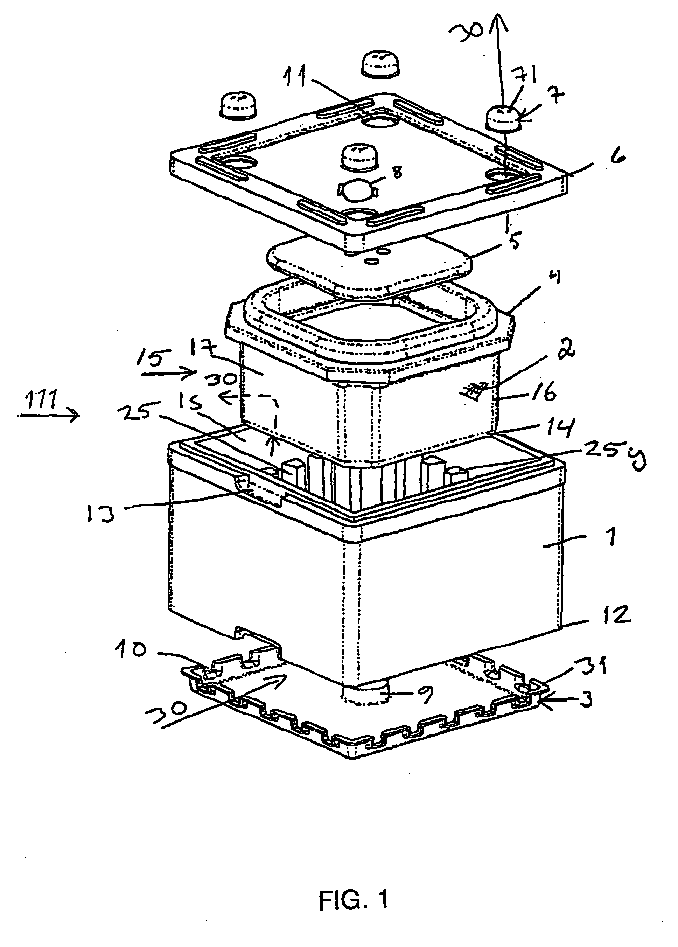

Referring to figure 1, the composter 111 has a cover 6 that may be lifted off and a wall 1, to which the bottom 12 of the composter is joined integrally. The inner surface 1s of the wall 1 is provided with protrusions 25 having an upper surface 25y. The wall 1 also has lifting edges 13 for easy moving of the composter.

An inner container 15 having a sieve portion 2 joined to and supported by the body 16 is adjusted into the composter 111. The sieve portion 2 extends from the wall portion 17 of the inner container 15 to the bottom portion 14 thereof. The sieve portion 2 is attached to the collar 4 of the inner container 15, which collar may be placed against the upper surfaces 25y of the protrusions 25 of the wall 1. Further, the inner container 15 has a cover 5, under which organic waste to be treated may be placed. Composting air 30 passes via the bottom portion 14 through the wall portion 17 between the wall 1 and the inner container 15.

On the cover 6 of the composter there are conical orifices 11 for removal of composting air 30 from the composter 111. As a treatment means of the composting air 30, filter bags 8 containing activated carbon are fitted into these conical orifices 11.

Protective caps 7 with perforations 71 for air are placed on these filter bags 8 containing activated carbon.

The bottom 12 of the composter 111 is adjusted on and supported by the upper border 31 of the lower container 3. The lower container 3 is provided with air inlet openings 10 for the passage of composting air 30 and for removing condensed water from lower container. In addition, there is a water drainage opening 9 in the lower container to pass forward the water flowing from the bottom 12 of the composter. The drainage opening 9 has a ridge allowing for the accumulation of water flowing from the composter 111 into the lower container. Composting air 30 may be humidified with this water accumulated into the lower container.

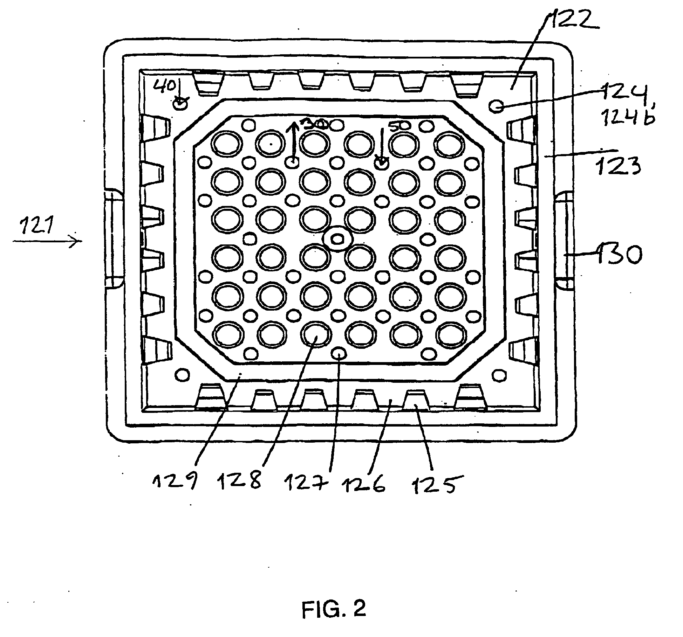

Referring now to Figure 2, the bottom 122 of the composter 121 is provided with elevations 128 and openings 127 beside them to pass composting air 30 into the composter 121. These elevations 128 and openings 127 are surrounded by a sealing rim 129, beyond which there are outlet openings 124 for condensed water 40 provided with activated carbon filters 124b. On the walls 123 of the composter, there are protrusions 125, and recesses 126 between them. In addition, the walls are provided with lifting edges 130.

In the composter 111, 121 according to Figures 1 and 2, composting air 30 passes through the air inlet openings 10 of the lower container 3 into the openings 127 of the bottom 122 and further into the (the) inner container 15 supported by the elevations 128 and sealing rim 129 on the bottom 122 through the bottom portion 14 of the inner container 15 having a sieve portion 2. Composting air 30 is removed from this inner container 15 and directed through the sieve portion 2 of the wall portion 17. Then composting air 30 is passed via the recesses 126 of the walls 123 through the orifices 11 of the cover and the filters (bags) containing activated carbon 8 to the atmosphere. Condensed water 40 produced in the composting process mainly flows into the lower container 3 through the outlet openings 124 for condensed water and filters 124 b on the bottom 122. Any separated water 50 mainly flows into the lower container 3 through the openings 127 on the bottom 122. Condensed water 40 accumulated in the lower container 3 and any separated water 50 therein humidify the composting air 30 flowing through the air inlet openings 10 of the lower container 3. The waters 40, 50 in the lower container may be removed through the water drainage opening 9.

## Claims

1. Composter useful for composting organic waste having a bottom, a wall, and a cover, and the bottom having openings for passage of composting air and separated water and the cover and/or the wall having openings for passage composting air, **characterized in that** the bottom (122) of the composter (111, 121) comprises elevations (128) with heights of 10 to 50 mm and openings (127) with surface areas of 50 to 500 mm² to pass composting air (30) and in the bottom (122) these elevations (128) and openings 127) are surrounded by a sealing rim (129), and that the walls (123) thereof comprise protrusions (25, 125) and recesses (126) with depths of 10 to 50 mm, and the composter (111) comprising an inner container (15) having an inner cover (5) and a sieve portion (2) in the bottom portion (14) and in the wall portion (17) of the inner container (15), and this inner container (15) being adjusted within the composter to be supported by the upper surfaces (25y) of the protrusions (25) of the walls and the sealing rim (129) of the bottom to pass composting air (30) via the sieve portion (2) of the bottom portion (14) in the inner container (15) and thereof via the sieve portion (2) of the wall portion (17) to the recesses (126) of the wall (123).

2. Composter according to claim 1, **characterized in that** the inner container (15) may be removed from the composter (111) and/or the sieve portion (2) may be removed from the inner container (15).

3. Composter according to claim 1 or 2, **characterized in that** the sieve portion (2) is a removable bag.

4. Composter according to any of the above claims, **characterized in that** the sieve portion (2) is joined to the inner container (15) by means of a collar (4) that may be adjusted against the inner surface (1s) of the wall and/or the protrusions (25) of the wall.

5. Composter according to any of the above claims, **characterized in that** the mesh size of the sieve portion (2) of the inner container (15) is from 0.5 to 2.5 mm.

6. Composter according to claims 4-5, **characterized in that** the collar (4) is configured to seal the inner container (15) with the upper part of the walls (3).

7. Composter according to any of the above claims, **characterized in that** the bottom (122) comprises beyond the sealing rim (129) one or more outlet opening(s) (124) for condensed water to remove said water (40) being accumulated beyond the sealing rim from the composter (121).

8. Composter according to claim 7, **characterized in that** an outlet opening (124) is provided with a filter (124b) to treat condensed water (40).

9. Composter according to any of the above claims, **characterized in that** a lower container (3) is placed under the bottom (12), this lower container comprising one or more drainage opening(s) (9) for water such as condensed water (40) or separated water (50) for the passage thereof, and one or more air inlet opening(s) (10) for composting air.

10. Composter according to claim 7-9, **characterized in that** the outlet opening (124) for condensed water on the bottom (122) and/or the water drainage opening (9) of the lower container (3) comprise(s) a removable plug or a water seal.

11. Composter according to any of the above claims, **characterized in that** the cover (6) and/or the wall (123) comprises one or more conical orifice(s) (11) for the passage of composting air (3).

12. Composter according to any of the above claims, **characterized in that** the wall (1) or the cover (6) or one or several of its conical orifice(s) (11) comprise(s) a means (8) for treating composting air such as a disposable activated carbon filter bag.

13. Composter according to any of the above claims, **characterized in that** the composter (111, 121) is cast from EPP (expanded polypropene).

14. Method for producing a composter useful for composting organic waste having a bottom, a wall, and a cover, and the bottom having openings for passage of composting air and separated water and the cover and/or the wall having openings for passage composting air, **characterized in that** the bottom (122) of the composter (111, 121) comprises elevations (128) with heights of 10 to 50 mm and openings (127) with surface areas of 50 to 500 mm² to pass composting air (30) and in the bottom (122) these elevations (128) and openings 127) are surrounded by a sealing rim (129), and that the walls (123) thereof comprise protrusions (25, 125) and recesses (126) with depths of 10 to 50 mm, and the composter (111) comprising an inner container (15) having an inner cover (5) and a sieve portion (2) in the bottom portion (14) and in the wall portion (17) of the inner container (15), and this inner container (15) being adjusted within the composter to be supported by the upper surfaces (25y) of the protrusions (25) of the walls and the sealing rim (129) of the bottom to pass composting air (30) via the sieve portion (2) of the bottom portion (14) in the inner container (15) and thereof via the sieve portion (2) of the wall portion (17) to the recesses (126) of the wall (123).

15. Method for composting organic waste, **characterized in that** organic waste such as biological household waste, garden waste, toilet waste or manure, and composting accelerator are placed into an inner container (15) of a composter according to claim 1-13 or manufactured according to claim 14.

## Patentansprüche

1. Komposter, der zum Kompostieren organischer Abfälle brauchbar ist und einen Boden, eine Wand und eine Abdeckung aufweist, wobei der Boden Öffnungen zum Durchlassen von Kompostierungsluft und abgesondertem Wasser aufweist und die Abdeckung und/oder die Wand Öffnungen zum Durchlassen von Kompostierungsluft aufweisen, **dadurch gekennzeichnet, dass** der Boden (122) des Komposters (111, 121) Erhebungen (128) mit Höhen von 10 bis 50 mm und Öffnungen (127) mit Oberflächen von 50 bis 500 mm² aufweist, um Kompostierungsluft (30) durchzulassen, wobei im Boden (122) diese Erhebungen (128) und Öffnungen (127) von einem Dichtungsrand (129) umgeben sind, und dass die Wände (123) derselben Vorsprünge (25, 125) und Aussparungen (126) mit Tiefen von 10 bis 50 mm aufweisen, wobei der Komposter (111) einen Innenbehälter (15) mit einer inneren Abdeckung (5) und einem Siebabschnitt (2) im Bodenabschnitt (14) und im Wandabschnitt (17) des Innenbehälters (15) umfasst, wobei dieser Innenbehälter (15) innerhalb des Komposters so angepasst wird, dass er durch die oberen Flächen (25y) der Vorsprünge (25) der Wände und durch den Dichtungsrand (129) des Bodens unterstützt wird, um Kompostierungsluft (30) durch den Siebabschnitt (2) des Bodenabschnitts (14) in den Innenbehälter (15) und von dort über den Siebabschnitt (2) des Wandabschnitts (17) zu den Aussparungen (126) der Wand (123) durchzulassen.

2. Komposter nach Anspruch 1, **dadurch gekennzeichnet, dass** der Innenbehälter (15) aus dem Komposter (111) entnommen werden kann und/oder der Siebabschnitt (2) aus dem Innenbehälter (15) entnommen werden kann.

3. Komposter nach Anspruch 1 oder 2, **dadurch gekennzeichnet, dass** der Siebabschnitt (2) ein entnehmbarer Beutel ist.

4. Komposter nach irgendeinem der vorangehenden Ansprüche, **dadurch gekennzeichnet, dass** der Siebabschnitt (2) mittels eines Kragens (4), der an der Innenfläche (1 s) der Wand und/oder den Vorsprüngen (25) der Wand angepasst werden kann, am Innenbehälter (15) angefügt ist.

5. Komposter nach irgendeinem der vorangehenden Ansprüche, **dadurch gekennzeichnet, dass** die Maschenweite des Siebabschnitts (2) des Innenbehälters (15) zwischen 0,5 und 2,5 mm beträgt.

6. Komposter nach einem der Ansprüche 4 oder 5, **dadurch gekennzeichnet, dass** der Kragen (4) so konfiguriert ist, dass er den Innenbehälter (15) mit dem oberen Teil der Wände (3) abdichtet.

7. Komposter nach irgendeinem der vorangehenden Ansprüche, **dadurch gekennzeichnet, dass** der Boden (122) jenseits des Dichtungsringes (129) eine oder mehrere Auslassöffnungen (124) für Kondenswasser umfasst, um das Wasser (40), das jenseits des Dichtungsrandes angesammelt wird, aus dem Komposter (121) abzuführen.

8. Komposter nach Anspruch 7, **dadurch gekennzeichnet, dass** eine Auslassöffnung (124) mit einem Filter (124b) zum Behandeln des Kondenswassers (40) versehen ist.

9. Komposter nach irgendeinem der vorangehenden Ansprüche, **dadurch gekennzeichnet, dass** ein unterer Behälter (3) unter dem Boden (12) platziert ist, wobei dieser untere Behälter eine oder mehrere Ableitungsöffnungen (9) für Wasser, wie z. B. Kondenswasser (40) oder abgesondertes Wasser (50), aufweist, um dieses hindurchzulassen, sowie ein oder mehrer Lufteinlassöffnungen (10) für Kompostierungsluft aufweist.

10. Komposter nach irgendeinem der Ansprüche 7 bis 9, **dadurch gekennzeichnet, dass** die Auslassöffnung (124) für Kondenswasser am Boden (122) und/oder die Entwässerungsöffnung (9) des unteren Behälters (3) einen entnehmbaren Stopfen oder eine Wasserabdichtung umfassen.

11. Komposter nach irgendeinem der vorangehenden Ansprüche, **dadurch gekennzeichnet, dass** die Abdeckung (6) und/oder die Wand (123) eine oder mehrere konische Öffnungen (11) zum Durchlassen von Kompostierungsluft (3) aufweisen.

12. Komposter nach irgendeinem der vorangehenden Ansprüche, **dadurch gekennzeichnet, dass** die Wand (1) oder die Abdeckung (6) oder eine oder mehrere ihrer konischen Öffnungen (11) ein Mittel (8) zum Behandeln von Kompostierungsluft umfassen, wie z. B. einen Einweg-Aktivkohlefilterbeutel.

13. Komposter nach irgendeinem der vorangehenden Ansprüche, **dadurch gekennzeichnet, dass** der Komposter (111, 121) aus EPP (geschäumtes Polypropylen) gegossen ist.

14. Verfahren zum Herstellen eines Komposters, der zum Kompostieren organischer Abfälle brauchbar ist und einen Boden, eine Wand und eine Abdeckung aufweist, wobei der Boden Öffnungen zum Durchlassen von Kompostierungsluft und abgesondertem Wasser aufweist und die Abdeckung und/oder die Wand Öffnungen zum Durchlassen von Kompostierungsluft aufweisen, **dadurch gekennzeichnet, dass** der Boden (122) des Komposters (111, 121) Erhebungen (128) mit Höhen von 10 bis 50 mm und Öffnungen (127) mit Oberflächen von 50 bis 500 mm² aufweist, um Kompostierungsluft (30) durchzulassen, wobei im Boden (122) diese Erhebungen (128) und Öffnungen (127) von einem Dichtungsrand (129) umgeben sind, und dass die Wände (123) derselben Vorsprünge (25, 125) und Aussparungen (126) mit Tiefen von 10 bis 50 mm aufweisen, wobei der Komposter (111) einen Innenbehälter (15) mit einer inneren Abdeckung (5) und einem Siebabschnitt (2) im Bodenabschnitt (14) und im Wandabschnitt (17) des Innenbehälters (15) umfasst, wobei dieser Innenbehälter (15) innerhalb des Komposters so angepasst wird, dass er durch die oberen Flächen (25y) der Vorsprünge (25) der Wände und durch den Dichtungsrand (129) des Bodens unterstützt wird, um Kompostierungsluft (30) durch den Siebabschnitt (2) des Bodenabschnitts (14) in den Innenbehälter (15) und von dort über den Siebabschnitt (2) des Wandabschnitts (17) zu den Aussparungen (126) der Wand (123) durchzulassen.

15. Verfahren zum Kompostieren organischer Abfälle, **dadurch gekennzeichnet, dass** die organischen Abfälle, wie z. B. biologische Haushaltsabfälle, Gartenabfälle, Toilettenabfälle oder Stallmist, und ein Kompostierungsbeschleuniger in einem Innenbehälter (15) eines Komposters nach irgendeinem der Ansprüche 1 bis 13, oder hergestellt nach Anspruch 14, platziert werden.

## Revendications

1. Composteur utile pour le compostage de déchets organiques, ayant un fond, une paroi, et un couvercle, le fond étant doté d'ouvertures pour le passage de l'air de compostage et de l'eau séparée et le couvercle et/ou la paroi étant doté(s) d'ouvertures pour le passage de l'air de compostage, **caractérisé en ce que** le fond (122) du composteur (111, 121) comprend des élévations (128) avec des hauteurs de 10 à 50 mm et des ouvertures (127) avec des superficies de 50 à 500 mm² pour faire passer l'air de compostage (30) et dans le fond (122), ces élévations (128) et ouvertures (127) sont entourées d'un rebord d'étanchéité (129), et que les parois (123) de celui-ci comprennent des saillies (25, 125) et des cavités (126) avec des profondeurs de 10 à 50 mm, le composteur (111) comprenant un conteneur interne (15) doté d'un couvercle interne (5) et d'une portion de tamis (2) dans la portion inférieure (14) et dans la portion de paroi (17) du conteneur interne (15), ce conteneur interne (15) étant ajusté dans le composteur de façon à être supporté par les surfaces supérieures (25y) des saillies (25) des parois et le rebord d'étanchéité (129) du fond pour faire passer l'air de compostage (30) via la portion de tamis (2) de la portion de fond (14) dans le conteneur interne (15) et de celui-ci, via la portion de tamis (2) de la portion de paroi (17) aux cavités (126) de la paroi (123).

2. Composteur selon la revendication 1, **caractérisé en ce que** le conteneur interne (15) peut être enlevé du composteur (111) et/ou la portion de tamis (2) peut être enlevée du conteneur interne (15).

3. Composteur selon la revendication 1 ou 2, **caractérisé en ce que** la portion de tamis (2) est un sac amovible.

4. Composteur selon l'une quelconque des revendications ci-dessus, **caractérisé en ce que** la portion de tamis (2) est jointe au conteneur interne (15) au moyen d'un collier (4) qui peut être ajusté contre la surface intérieure (1s) de la paroi et/ou les saillies (25) de la paroi.

5. Composteur selon l'une quelconque des revendications, **caractérisé en ce que** la taille de maille de la portion de tamis (2) du conteneur interne (15) est comprise entre 0,5 et 2,5 mm.

6. Composteur selon les revendications 4-5, **caractérisé en ce que** le collier (4) est configuré pour sceller le conteneur intérieur (15) avec la partie supérieure des parois (3).

7. Composteur selon l'une quelconque des revendications précédentes, **caractérisé en ce que** le fond (122) comprend, au-delà du rebord d'étanchéité (129), une ou plusieurs ouverture(s) de sortie (124) pour l'eau condensée afin d'enlever ladite eau (40) accumulée au-delà du rebord d'étanchéité du composteur (121).

8. Composteur selon la revendication 7, **caractérisé en ce qu'**une ouverture de sortie (124) est dotée d'un filtre (124b) pour traiter l'eau condensée (40).

9. Composteur selon l'une quelconque des revendications ci-dessus, **caractérisé en ce qu'**un conteneur inférieur (3) est placé sous le fond (12), ce conteneur inférieur comprenant une ou plusieurs ouvertures de drainage (9) pour le passage de l'eau, comme l'eau condensée (40) ou l'eau séparée (50), et une ou plusieurs ouverture(s) d'entrée (10) pour l'air de compostage.

10. Composteur selon la revendication 7-9, **caractérisé en ce que** l'ouverture de sortie (124) pour l'eau condensée sur le fond (122) et/ou l'ouverture de drainage d'eau (9) du conteneur inférieur (3) comprend (comprennent) un bouchon amovible ou un bouchon d'eau.

11. Composteur selon l'une quelconque des revendications précédentes, **caractérisé en ce que** le couvercle (6) et/ou la paroi (123) comprennent un ou plusieurs orifices coniques (11) pour le passage de l'air de compostage (3).

12. Composteur selon l'une quelconque des revendications précédentes, **caractérisé en ce que** la paroi (1) ou le couvercle (6) ou un ou plusieurs de ses orifices coniques (11) comprennent un système (8) pour traiter l'air de compostage comme le sac de filtre à charbon actif jetable.

13. Composteur selon l'une quelconque des revendications précédentes, **caractérisé en ce que** le composteur (111, 121) est coulé à partir d'EPP (polypropylène expansé).

14. Procédé de production d'un composteur utile pour composter les déchets organiques, doté d'un fond, d'une paroi, et d'un couvercle, le fond ayant des ouvertures pour le passage de l'air de compostage et de l'eau séparée et le couvercle et/ou la paroi ayant des ouvertures pour le passage de l'air de compostage, **caractérisé en ce que** le fond (122) du composteur (111, 121) comprend des élévations (128) avec des hauteurs de 10 à 50 mm et des ouvertures (127) avec des superficies de 50 à 500 mm² pour faire passer l'air de compostage (30) et dans le fond (122), ces élévations (128) et ouvertures (127) sont entourées d'un rebord d'étanchéité (129) et les parois (123) de celui-ci comprennent des saillies (25, 125) et des cavités (126) avec des profondeurs de 10 à 50 mm, et le composteur (111) comprenant un conteneur interne (15) ayant un couvercle interne (5) et une portion de tamis (2) dans la portion inférieure (14) et dans la portion de paroi (17) du conteneur interne (15), ce conteneur interne (15) étant ajusté dans le composteur pour être supporté par les surfaces supérieures (25y) des saillies (25) des parois et le rebord d'étanchéité (129) du fond pour faire passer l'air de compostage (30) via la portion de tamis (2) de la portion de fond (14) dans le conteneur interne (15) et ainsi via la portion de tamis (2) de la portion de paroi (17) jusqu'aux cavités (126) de la paroi (123).

15. Procédé de compostage de déchets organiques, **caractérisé en ce que** les déchets organiques, comme les déchets domestiques biologiques, les déchets de jardin, les déchets de toilettes ou le fumier, et l'accélérateur de compostage sont placés dans un conteneur interne (15) d'un composteur selon la revendication 1-13 ou fabriqué selon la revendication 14.
